# EUROPÄISCHE PATENTSCHRIFT

(11) **EP 2 725 894 B1**
(45) Veröffentlichungstag und Bekanntmachung des Hinweises auf die Patenterteilung: **10.02.2016**
(21) Anmeldenummer: 12745621.8
(22) Anmeldetag: 24.06.2012
(51) Int. Cl.: A01G 17/02, A01G 3/04

(54) **FAHRBARE VORRICHTUNG ZUM AUSZIEHEN VON RUTEN, ZWEIGEN, TRIEBEN, INSBESONDERE VON REBEN AUS EINEM SPALIER**
MOVABLE DEVICE FOR PULLING OUT CANES, BRANCHES, SHOOTS, AND IN PARTICULAR VINES FROM AN ESPALIER
DISPOSITIF MOBILE POUR RETIRER DES BAGUETTES, DES BRANCHES, DES POUSSES, EN PARTICULIER DE SARMENTS, D'UN TREILLAGE

(30) Priorität: 01.07.2011 DE 102011106181
(43) Veröffentlichungstag der Anmeldung: 07.05.2014
(73) Patentinhaber: Wagner, Jürgen, 67159 Friedelsheim (DE)
(72) Erfinder: Wagner, Jürgen, 67159 Friedelsheim (DE)
(74) Vertreter: Fritsch, Klaus
(86) Internationale Anmeldenummer: PCT/EP2012/002665
(87) Internationale Veröffentlichungsnummer: WO 2013/004355

(56) Entgegenhaltungen:
- WO-A1-2009/022915
- DE-B4-102004 031 088

## Beschreibung

Die Erfindung betrifft eine Vorrichtung nach dem Oberbegriff des Anspruches 1. Insbesondere betrifft die Erfindung eine Vorrichtung, die in der Hauptsache in Weinbergen einsetzbar ist.

Rebstöcke in Weinbergen werden in Spalieren hochgezogen, die in bestimmten Abständen in den Boden eingesteckte Pfähle umfassen, zwischen denen zumindest in ihren oberen Endbereichen parallel zueinander verlaufende Spann- oder Spalierdrähte gespannt sind, an denen die Rebstöcke oder Rebpflanzen gehalten sind. Die Spanndrähte sind meist hinter an den Pfählen, die überwiegend aus Metall bestehen, angeordneten Haken eingehängt, so dass die Spanndrähte bei Bedarf aus den Haken ausgehängt werden können. Die Pfähle überragen die Spanndrähte geringfügig.

Häufig sind in einem Spalier zwei parallel verlaufende Spanndrähte vorgesehen, zwischen denen die Triebe der Reben nach oben herauswachsen und von diesen gehaltenen sind. In manchen Spalieren in einem Weinberg sind weitere unterhalb gespannte Spannähte vorgesehen, die hier nicht näher betrachtet werden.

Die Triebe, die durch die Spanndrähte zwischen diesen nach oben herauswachsen, müssen jährlich zurückgeschnitten werden, was im Winter oder im Frühjahr erfolgen kann. In manchen Weinbergen werden die Triebe manuell zurückgeschnitten und ausgezogen. Dieses ist sehr arbeitsaufwendig.

Eine Vorrichtung der eingangs genannten Art, mit der wenigstens das Ausziehen der Reben maschinell erfolgt, ist aus der DE 10 2004 031 088 B4 bekannt geworden. Diese Vorrichtung besitzt zwei rotierende Walzen, deren Längsachse parallel zu den Spalier- oder Spanndrähten verlaufen und denen die Reben mittels einer maulartigen Einlaufvorrichtung zugeführt werden. Damit die Walzen die Spanndrähte nicht beschädigen können, werden die Spanndrähte mittels der Einlaufvorrichtung zugeordneter Führungsrollen auseinander gedrückt. Daher müssen die Spanndrähte vorher aus den Haken der Pfähle ausgehängt.

Eine weitere derartige Vorrichtung ist aus der WO 2009/022 915 A1 bekannt.

Aufgabe der Erfindung ist es, eine Vorrichtung der eingangs genannten Art zu schaffen, mit der das Ausziehen der Ruten, Zweige, Triebe und dergleichen weiter vereinfacht wird und Beschädigungen am Spalier, insbesondere der Spanndrähte, vermieden ist.

Diese Aufgabe wird erfindungsgemäß durch die Merkmale des Anspruches 1 gelöst.

Erfindungsgemäß ist die verfahrbare Vorrichtung zum Ausziehen von abgeschnittenen Zweigen, Ruten, insbesondere von Reben bzw. deren Trieben, welche in einem wenigstens einen zwischen vertikal in den Boden eingesteckten Pfählen gehaltenen, horizontal verlaufenden Spanndraht aufweisenden Spalier gehalten sind und den wenigstens einen Spanndraht vertikal überragen, wobei die Vorrichtung zwei angetriebene walzenartige Räder aufweist, mittels denen die Zweige, Ruten, Triebe oder dergleichen nach oben abgezogen werden, dadurch gekennzeichnet, dass die Vorrichtung eine mehrere Finger aufweisende drehbare Fingeranordnung oberhalb des wenigstens eines Spanndrahtes umfasst, die dem wenigstens einen Spanndraht so zugeordnet ist, dass die Finger beim Verfahren der Vorrichtung in dem Spalier gegen den bzw. über den wenigstens einen Spanndraht geschwenkt werden und diesen festhält oder vertikal nach unten drückt, wenn die Triebe nach oben herausgezogen werden, so dass der wenigstens eine Spanndraht nicht beschädigt oder aus seiner Halterung an den Pfählen herausgezogen wird.

Dabei ist klar, dass nicht nur ein Spanndraht vorgesehen ist, sondern auch zwei Spanndrähte eingesetzt werden können, zwischen denen die Triebe festgehalten sind und durch die die Triebe nach oben wachsen können.

Bei einem maschinellen Ausziehen der Triebe besteht das Problem, dass die Triebe den Spanndraht oder die Spanndrähte nach oben ziehen, so dass der bzw. die Spanndrähte aus ihrer Halterung an den Pfählen herausgezogen werden, was nachteilig ist. Zu ergänzen ist, dass an den Pfählen Haken angeordnet sind, die nach ober offen sind und in die die Spanndrähte eingehängt werden. Außerdem können die Spanndrähte beschädigt werden.

Ein großer Vorteil der Erfindung besteht darin, dass ein Aushängen der Spanndrähte an den Haltepfosten vermieden wird, was den Arbeitsaufwand deutlich verringert. Ein weiterer wesentlicher Vorteil besteht darin, dass der bzw. die Spanndrähte nicht von der Vorrichtung zum Ausziehen der Ruten oder Reben oder Triebe nach oben aus den an den Pfählen vorgesehenen Haken heraus- oder hochgezogen werden, weil der bzw. die Spanndrähte von den Fingern festgehalten oder ausreichend weit nach unten gedrückt werden.

Die Wirkungsweise ist dabei so, dass die Finger über oder gegen die Spanndrähte geschwenkt werden, wobei die Finger die Spanndrähte nicht berühren oder nur geringfügig nach unten drücken. Dadurch werden die Spanndrähte beim Ausziehen der Triebe in den an den Pfählen angebrachten Haken festgehalten.

Die Finger können aus Stahl, Kunststoff oder dergleichen bestehen, sofern das Material eine ausreichende Steifigkeit aufweist.

Dabei können die Finger der Fingeranordnung an einem Haltekopf angebracht sein, der während des Verfahrens der Vorrichtung in Drehung versetzbar ist, so dass die Finger nacheinander von oben gegen die Spanndrähte geschwenkt werden und diese nach unten drücken. Die Finger sind am Umfang des Haltekopfes gleichmäßig verteilt angebracht.

Jeder Finger ist dabei L-förmig ausgebildet, wobei ein Schenkel jedes Fingers am Haltekopf angebracht ist und der freie Schenkel beim Drehen des Haltekopfes in seiner unteren Position horizontal verläuft, so dass der freie Schenkel über den bzw. die Spanndrähte geschwenkt oder von oben gegen die Spanndrähte bewegt wird. Wenn die Finger über den oder die Spanndrähte geschwenkt werden, müssen sie den oder die Spanndrähte nicht berühren, sondern bewegen sich in einem geringen Abstand oberhalb des oder der Spanndrähte über diese hinweg. Natürlich kann jeder Finger auch gegen den oder die Spanndrähte geschwenkt werden, so dass die Spanndrähte geringfügig nach unten gedrückt werden.

In einer vorteilhaften Ausgestaltung der Erfindung können die Finger federnd am Haltekopf angebracht sein, derart, dass die Finger in Umfangsrichtung und quer zu ihrer Längserstreckung bewegbar sind.

Die Schenkel können bevorzugt einen stumpfen Winkel miteinander bilden, der nach oben hin offen ist.

Die Welle kann in einem schrägen Winkel zum Pfosten geneigt sein, so dass bei Drehung des Haltekopfes die am Haltekopf anschließenden Schenkel sich in einer Ebene bewegen, die durch den schrägen Winkel der Welle bestimmt ist und sich die freien Schenkel der Finger in einer Kegelfläche bewegen, deren vertikal unten liegende Mantellinie horizontal und etwa senkrecht zu den Spanndrähten verläuft.

Der schräge Winkel, der ca. Zwischen 35 bis 50 Grad betragen kann, ist jedenfalls so bemessen, dass der Haltekopf außerhalb der Ebene bleibt, die vertikal ausgerichtet ist und durch die Spanndrähte verläuft. Dadurch wird erreicht, dass Triebe, die schräg nach oben wachsen, sich nicht am Haltekopf verfangen können.

Wenn die Schenkel einen rechten Winkel miteinander bilden, verläuft die Welle horizontal und die am Haltekopf anschließenden Schenkel drehen sich in einer vertikalen Ebene. Die freien Schenkel bewegen sich auf einer Zylinderfläche, die horizontal ausgerichtet ist.

Weitere vorteilhafte Ausgestaltungen und Verbesserungen sind den weiteren Unteransprüchen zu entnehmen.

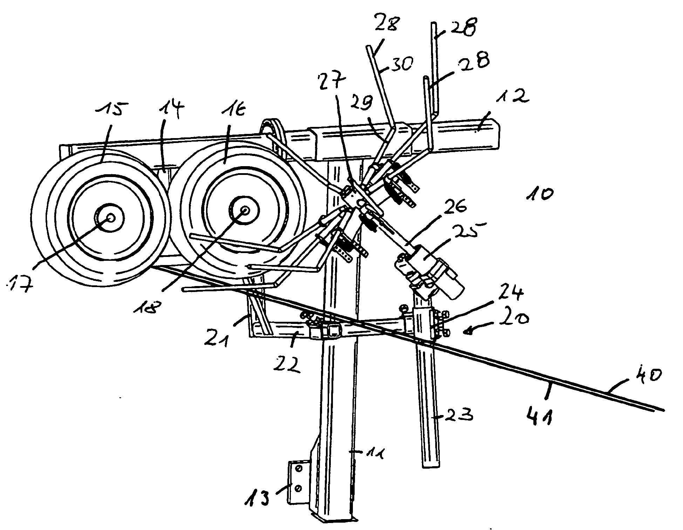

Anhand der Zeichnung, die eine perspektivische Ansicht einer erfindungsgemäßen Vorrichtung zeigt, sollen die Erfindung, weitere vorteilhafte Ausgestaltungen und Verbesserungen sowie weitere Vorteile näher erläutert und beschrieben werden.

Es zeigt die einzige Figur die erfindungsgemäße Vorrichtung.

An einem nicht näher dargestellten, z.B. von einem Traktor gezogenen Fahrzeug ist eine Vorrichtung 10 angebracht, die ein Gestell mit einem vertikal verlaufenden Pfosten 11 und einem an dessen oberem Ende befestigten Quersteg 12 aufweist. Der Pfosten 11 besitzt an seinem unteren Ende einen Flansch 13, mittels welchem die Vorrichtung an Fahrzeug befestigt werden kann.

Am Quersteg 12 sind mittels einer ersten Haltevorrichtung 14 zwei walzenartige Räder 15, 16 angebracht, die um je eine senkrecht zu der durch den Quersteg 12 und dem Pfosten 11 aufgespannten Ebene verlaufende Achse 17, 18 drehbar sind. Die Haltevorrichtung 14 ist durch die Räder 15, 16 abgedeckt, so dass nur ein Teilbereich der Haltevorrichtung 14 sichtbar ist. An den Rädern 15 und 16 sind senkrecht zu der Räderebene vorspringende elastisch-steife Zinken angebracht, die jeweils einen Zylinder bilden, deren Außenumfänge so einander zugeordnet sind, dass Reben zwischen die Zinken beider Räder 15, 16 eingeklemmt und damit erfasst und durch Drehung der Räder 15, 16 nach oben hochgezogen werden. Die Räder 15, 16 drehen dabei in entgegengesetzte Richtungen: das Rad 16 dreht im Uhrzeigersinn und das Rad 15 entgegengesetzt.

Am Quersteg 12 und am Pfosten 11 ist eine zweite Haltevorrichtung 20 befestigt, die einen ersten Arm 21, dessen freies Ende am Quersteg 12 befestigt ist und der vertikal parallel zum Pfosten 11 verläuft, und einen damit verbundenen zweiten Arm 22, der senkrecht zum ersten Arm 21 verläuft, umfasst. Der zweite Arm 22 ist am Pfosten 11 fixiert. Am freien Ende des zweiten Armes 22 ist etwa senkrecht dazu ein dritter Arm 23 verschiebbar zu dem zweiten Arm 22 angebracht. Der dritte Arm 23 ist von einer am zweiten Arm 22 befestigten Hülse 24 umfasst, innerhalb welcher der dritte Arm 23 gegenüber dem zweiten Arm 22 verschiebbar und auch mittels Schrauben fixierbar ist. Gegebenenfalls kann der dritte Arm 23, wie oben angedeutet, automatisch verschoben werden. Der dritte Arm 23 verläuft etwa vertikal. Es besteht die Möglichkeit, dass der dritte Arm innerhalb der Hülse 24 mittels einer Steuereinrichtung angetrieben wird, so dass er auf und ab verschoben werden kann. Die Ansteuerung erfolgt mittels einer Antriebsvorrichtung, die über Taster, Lichtschranken angesteuert wird, siehe weiter unten. Wie die zweite Haltevorrichtung 20 ausgebildet ist, ist für die Erfindung nicht von wesentlicher Bedeutung. Wesentlich ist die Anordnung des dritten Armes 23 dergestalt, dass dieser dritte Arm 23 in seiner Aufnahme verschiebbar angeordnet sein kann.

Am oberen Ende des dritten Armes 23 ist ein Lager 25 angebracht, in welchem eine Welle 26 gelagert ist, an deren freiem Ende ein Haltekopf 27 fixiert ist, der an seinem Umfang mehrere gleichmäßig verteilte Finger 28 trägt, die L-förmig ausgebildet sind, wobei die beiden Schenkel 29,30 einen stumpfen Winkel miteinander einschließen. Die Welle 26 ist zusammen mit dem Haltekopf 27 und dem Lager 25 unter einem schrägen Winkel zum Pfosten 11 ausgerichtet. Die am Haltekopf 27 anschließenden Schenkel 29 liegen in einer Ebene, die senkrecht zur Achse der Welle 26 verläuft. Die Ebene ist schräg zur Längserstreckung des Pfostens 11 ausgerichtet und der Winkel zwischen den beiden Schenkeln 29 und 30 ist so bemessen, dass die Schenkel 30 in ihrer vertikal untersten Position während ihrer Drehung horizontal ausgerichtet sind. Entsprechend ist auch die winkelige Ausrichtung der Welle 26.

Unterhalb der Räder 15, 16 und unterhalb der Anordnung der Finger 28 verlaufen zwei Spanndrähte 40, 41, zwischen denen die Rebtriebe festgehalten sind. Die Spanndrähte 40, 41 sind zwischen Pfählen (nicht näher dargestellt) fixiert. Wenn die Vorrichtung 10 im Weinberg benutzt wird, befinden sich die Räder 15 und 16, die Fingeranordnung mit dem Haltekopf 27 und den Finger 28 oberhalb der Spanndrähte 40, 41, wogegen die Pfähle mit ihrem oberen Ende in den Bewegungsweg der Finger 28 hineinragen können. Damit die Vorrichtung 10 durch die Pfähle nicht beschädigt wird, sind die Finger 28 beweglich am Haltekopf 27 angebracht, wobei eine Federanordnung vorgesehen ist, die den Fingern 28 gestatten, sich aufeinander zuzubewegen, wenn ein Finger 28 an einem Pfahl anschlägt, so dass der Finger 28 eine Ausweichbewegung durchführen kann. Die Federanordnung bringt den Finger 28 wieder in seine Normalstellung.

Wie oben erwähnt kann der dritte Arm 23 automatisch gegenüber den zweiten Arm 22 verschoben werden, was dann der Fall sein kann, wenn sich die Fingeranordnung einem Pfahl annähert. Mittels Taster oder Lichtschranken wird der dritten Arm 23 und damit die Fingeranordnung bei der Annäherung an den Pfahl angehoben und nach Vorbeifahrt wieder abgesenkt wird.

Die Welle 26 wird von einem Motor angetrieben, dessen Drehzahl konstant oder mit der Fahrgeschwindigkeit des Fahrzeuges variierbar ist.

## Patentansprüche

1. Verfahrbare Vorrichtung (10) zum Ausziehen von abgeschnittenen Zweigen, Ruten, insbesondere von Reben und/oder deren Trieben, welche in einem wenigstens einen zwischen vertikal in den Boden eingesteckten Pfählen gehaltenen, horizontal verlaufenden Spanndraht (40) aufweisenden Spalier gehalten sind und den wenigstens einen Spanndraht (40) vertikal überragen, wobei die Vorrichtung (10) zwei angetriebene, walzenartige Räder (15, 16) aufweist, mittels denen die Zweige, Ruten oder Triebe von dem wenigstens einen Spanndraht (40) nach oben abgezogen werden, **dadurch gekennzeichnet, dass** die Vorrichtung (10) eine mehrere Finger (28) aufweisende drehbare und angetriebene Fingeranordnung oberhalb des wenigstens einen Spanndrahtes (40) umfasst, die dem wenigstens einen Spanndraht (40) so zugeordnet ist, dass die Finger (28) beim Verfahren der Vorrichtung (10) gegen und/oder über den wenigstens einen Spanndraht (40) geschwenkt werden und diesen festhalten oder nach unten drücken, wenn die Ruten oder Triebe nach oben herausgezogen werden, so dass der wenigstens eine Spanndraht (40) nicht beschädigt oder nach oben aus seiner Halterung an den Pfählen abgezogen werden.

2. Vorrichtung nach Anspruch 1, **dadurch gekennzeichnet, dass** die Finger (28) an einem Haltekopf (27) angebracht sind, der mit einer angetriebenen Welle (26) verbunden ist, die während des Verfahrens der Vorrichtung (10) in Drehung versetzbar ist, so daß die Finger (28) nacheinander von oben über oder gegen den wenigstens einen Spanndraht (40) geschwenkt werden und diese festhalten oder nach unten drücken.

3. Vorrichtung nach Anspruch 2, **dadurch gekennzeichnet, dass** jeder Finger (28) L-förmig ausgebildet ist, dessen einer Schenkel (29) am Haltekopf (27) angebracht ist und dessen freier Schenkel (30) beim Drehen des Haltekopfes (27) in eine untere Position gelangt, in der er horizontal verläuft und damit von oben gegen die Spanndrähte bewegt wird.

4. Vorrichtung nach Anspruch 3, **dadurch gekennzeichnet, dass** die Finger (28) federnd am Haltekopf (27) angebracht sind, derart, dass die Finger (28) in Umfangsrichtung und quer zu ihrer Längserstreckung bewegbar sind.

5. Vorrichtung nach einem der vorigen Ansprüche, **dadurch gekennzeichnet, dass** die Schenkel (29,30) jedes Fingers (28) einen stumpfen Winkel miteinander bilden, der nach oben hin offen ist.

6. Vorrichtung nach Anspruch 5, **dadurch gekennzeichnet, dass** die Welle (26) in einem schrägen Winkel zu einem vertikal verlaufenden Pfosten (11) eines an einem Fahrzeug befestigten Gestells geneigt ist, so dass bei Drehung des Haltekopfes (27) die am Haltekopf (27) anschließenden Finger (28) sich in einer Ebene bewegen, die durch den schrägen Winkel der Welle (26) bestimmt ist und sich die freien Schenkel (30) der Finger (28) in einer Kegelfläche bewegen, deren vertikal unten liegende Mantellinie horizontal und quer zu den Spanndrähten (40) verläuft.

7. Vorrichtung (10) nach einem der vorigen Ansprüche, **dadurch gekennzeichnet, dass** die Finger (28) aus Metall oder Kunststoff bestehen.

8. Vorrichtung (10) nach einem der vorigen Ansprüche, **dadurch gekennzeichnet, dass** das Gestell den vertikal verlaufenden Pfosten (11) und einen an dessen oberen Ende befestigten Quersteg (12) umfasst, an dem die gegenläufigen Räder (15,16) zum Ausziehen der Ruten etc. gelagert sind und an dem eine zweite Haltevorrichtung (20) angebracht ist, die einen dritten Arm (23) umfasst, der etwa vertikal verläuft und an dessen oberen Ende das Lager (25), die Welle (26) und gegebenenfalls ein Motor zum Antrieb der Welle 26 und die Fingeranordnung angeordnet sind.

9. Vorrichtung nach Anspruch 8, **dadurch gekennzeichnet, dass** der dritte Arm (23) in seiner Längsrichtung verschiebbar in der zweiten Haltevorrichtung (20) angebracht ist.

10. Vorrichtung nach Anspruch 9, **dadurch gekennzeichnet, dass** die Bewegungssteuerung des dritten Armes (23) mittels Tastern, Lichtschranken und dergleichen durchführbar ist.

## Claims

1. Movable device (10) for pulling out cut-off branches, canes, and in particular vines and/or shoots thereof which are held in an espalier having at least one horizontally extending tension wire (40) held between stakes driven vertically into the ground and which project vertically over the at least one tension wire (40), wherein the device (10) has two driven, roller-like wheels (15, 16) by means of which the branches, canes or shoots are pulled off upwards from the at least one tension wire (40), **characterized in that** the device (10) comprises a rotatable and driven finger arrangement which has a plurality of fingers (28) and is disposed above the at least one tension wire (40), which finger arrangement is assigned to the at least one tension wire (40) in such a way that, during movement of the device (10), the fingers (28) are pivoted towards and/or over the at least one tension wire (40) and secure it or press it downwards when the canes or shoots are pulled out upwards, so that the at least one tension wire (40) is not damaged or pulled off upwardly from its mounting on the stakes.

2. Device according to Claim 1, **characterized in that** the fingers (28) are mounted on a holding head (27) which is connected to a driven shaft (26) which can be set in rotation during the movement of the device (10), so that the fingers (28) are pivoted in succession from above over or towards the at least one tension wire (40) and secure it or press it downwards.

3. Device according to Claim 2, **characterized in that** the each finger (28) is of L-shaped design, one leg (29) thereof being mounted on the holding head (27) and the free leg, (30) thereof passing, during the rotation of the holding head (27), into a lower position in which it extends horizontally and is thus moved from above towards the tension wires.

4. Device according to Claim 3, **characterized in that** the fingers (28) are mounted resiliently on the holding head (27) in such a way that the fingers (28) are movable in the circumferential direction and transversely to their longitudinal extent.

5. Device according to one of the preceding claims, **characterized in that** the legs (29, 30) of each finger (28) form an obtuse angle with one another which is open to the top.

6. Device according to Claim 5, **characterized in that** the shaft (26) is inclined at an acute angle to a vertically extending post (11) of a framework fastened to a vehicle, so that, during rotation of the holding head (27), the fingers (28) adjoining the holding head (27) move in a plane which is defined by the acute angle of the shaft (26) and the free legs (30) of the fingers (28) move within a conical area whose generatrix situated vertically at the bottom extends horizontally and transversely to the tension wires (40).

7. Device (10) according to one of the preceding claims, **characterized in that** the fingers (28) are made of metal or plastic.

8. Device (10) according to one of the preceding claims, **characterized in that** the framework comprises the vertically extending post (11) and a crossbar (12) fastened to its upper end and on which the contrarotating wheels (15, 16) for pulling out the canes etc. are mounted and on which a second holding device (20) is mounted which comprises a third arm (23) which extends approximately vertically and at whose upper end the bearing (25), the shaft (26) and, if appropriate, a motor for driving the shaft (26) and the finger arrangement are arranged.

9. Device according to Claim 8, **characterized in that** the third arm (23) is mounted in the second holding device (20) so as to be displaceable in its longitudinal direction.

10. Device according to Claim 9, **characterized in that** the movement of the third arm (23) can be controlled by means of sensing devices, light barriers and the like.

## Revendications

1. Dispositif mobile (10) pour retirer des branches ou des baguettes coupées, en particulier de vignes et/ou de leurs pousses, qui sont retenues dans un treillage présentant au moins un fil tendeur (40) placé horizontalement maintenu entre des piquets plantés verticalement dans le sol et qui dépassent verticalement au-dessus dudit au moins un fil tendeur (40), dans lequel le dispositif (10) présente deux roues entraînées en forme de rouleaux (15, 16), au moyen desquelles les branches, les baguettes ou les pousses sont tirées vers le haut à partir dudit au moins un fil tendeur (40), **caractérisé en ce que** le dispositif (10) comprend un agencement de doigts entraîné et rotatif présentant plusieurs doigts (28), au-dessus dudit au moins un fil tendeur (40), qui est associé audit au moins un fil tendeur (40), de telle manière que, lors du déplacement du dispositif (10), les doigts (28) pivotent contre et/ou au-dessus dudit au moins un fil tendeur (40) et immobilisent celui-ci ou le poussent vers le bas, lorsque les baguettes ou les pousses sont retirées vers le haut, de telle manière que ledit au moins un fil tendeur (40) ne soit pas endommagé ou ne soit pas arraché vers le haut hors de son support sur les piquets.

2. Dispositif selon la revendication 1, **caractérisé en ce que** les doigts (28) sont montés sur une tête de maintien (27), qui est assemblée à un arbre entraîné (26), qui peut être mis en rotation pendant le déplacement du dispositif (10), de telle manière que les doigts (28) pivotent l'un après l'autre à partir du haut contre ou au-dessus dudit au moins un fil tendeur (40) et immobilisent celui-ci ou le poussent vers le bas.

3. Dispositif selon la revendication 2, **caractérisé en ce que** chaque doigt (28) est réalisé en forme de L, dont une branche (29) est attachée à la tête de maintien (27) et dont la branche libre (30) arrive lors de la rotation de la tête de maintien (27) dans une position inférieure, dans laquelle elle s'étend horizontalement et elle est ainsi déplacée à partir du haut contre les fils tendeurs.

4. Dispositif selon la revendication 3, **caractérisé en ce que** les doigts (28) sont montés élastiquement sur la tête de maintien (27), de telle manière que les doigts (28) soient déplaçables en direction périphérique et transversalement à leur direction longitudinale.

5. Dispositif selon l'une quelconque des revendications précédentes, **caractérisé en ce que** les branches (29, 30) de chaque doigt (28) forment entre elles un angle obtus, qui est ouvert vers le haut.

6. Dispositif selon la revendication 5, **caractérisé en ce que** l'arbre (26) est disposé en oblique par rapport à un montant orienté verticalement (11) d'une structure fixée à un véhicule, de telle manière que, lors de la rotation de la tête de maintien (27), les doigts (28) attachés à la tête de maintien (27) se déplacent dans un plan qui est défini par l'angle oblique de l'arbre (26) et que les branches libres (30) des doigts (28) se déplacent dans une surface conique, dont la génératrice verticalement inférieure s'étend horizontalement et transversalement aux fils tendeurs (40).

7. Dispositif (10) selon l'une quelconque des revendications précédentes, **caractérisé en ce que** les doigts (28) sont constitués de métal ou de matière plastique.

8. Dispositif (10) selon l'une quelconque des revendications précédentes, **caractérisé en ce que** la structure comprend le montant orienté verticalement (11) et une entretoise transversale (12) fixée à l'extrémité supérieure de celui-ci, sur laquelle sont montées les roues (15, 16) tournant en sens contraire pour le retrait des baguettes, etc. et sur lequel est installé un deuxième dispositif de maintien (20), qui comprend un troisième bras (23), qui est sensiblement vertical et à l'extrémité supérieure duquel sont disposés le palier (25), l'arbre (26) et éventuellement un moteur pour l'entraînement de l'arbre (26) ainsi que l'agencement de doigts.

9. Dispositif selon la revendication 8, **caractérisé en ce que** le troisième bras (23) est monté dans le deuxième dispositif de maintien (20) de façon déplaçable selon sa direction longitudinale.

10. Dispositif selon la revendication 9, **caractérisé en ce que** la commande du mouvement du troisième bras (23) peut être' exécutée au moyen de boutons-poussoirs, de barrières lumineuses et analogues.
